# FASCICULE DE BREVET EUROPEEN

(11) **EP 1 784 354 B1**
(45) Date de publication et mention de la délivrance du brevet: **07.04.2010**
(21) Numéro de dépôt: 05793481.2
(22) Date de dépôt: 28.07.2005
(51) Int. Cl.: C01B 3/50, B01D 53/22, B01J 8/00

(54) **SYSTEME ETAGE DE PRODUCTION D'HYDROGENE PURIFIE, A PARTIR D'UN MELANGE GAZEUX REACTIONNEL COMPRENANT UN COMPOSE HYDROCARBONE.**
STUFENSYSTEM ZUR HERSTELLUNG GEREINIGTEN WASSERSTOFFS AUS EINER REAKTIONSGASMISCHUNG MIT EINER KOHLENWASSERSTOFFVERBINDUNG
STAGE SYSTEM FOR PRODUCING PURIFIED HYDROGEN FROM A REACTION GASEOUS MIXTURE CONTAINING A HYDROCARBON COMPOUND

(30) Priorité: 06.08.2004 FR 0408731
(43) Date de publication de la demande: 16.05.2007
(73) Titulaire: Compagnie Européenne des Technologies de l'Hydrogène (CETH), 91460 Marcoussis (FR)
(72) Inventeur: GERNOT, Eric, F-92160 Antony (FR); DESCHAMPS, Arnaud, F-91570 Bièvres (FR)
(74) Mandataire: de Saint-Palais, Arnaud Marie
(86) Numéro de dépôt international: PCT/FR2005/001986
(87) Numéro de publication internationale: WO 2006/024759

(56) Documents cités:
- EP-A- 0 783 919
- WO-A-00/27507
- DE-B- 1 257 756
- GB-A- 1 256 153
- US-A- 3 241 293
- US-A- 3 534 531
- US-A- 3 854 904
- US-A- 5 674 301

## Description

La présente invention concerne un système étagé de production d'hydrogène purifié, à partir d'un mélange gazeux réactionnel comprenant un composé hydrocarboné tel que, par exemple, un alcool ou un gaz de synthèse contenant du monoxyde de carbone.

D'une manière générale, on sait que l'hydrogène purifié est utilisé dans la fabrication de nombreux produits, comme les métaux, les semi-conducteurs et la microélectronique. C'est aussi une importante source de combustible pour de nombreux systèmes de conversion d'énergie. Par exemple, les piles à combustibles utilisent l'hydrogène et un oxydant pour produire un potentiel électrique. Des procédés variés peuvent être utilisés pour produire l'hydrogène. L'un d'entre eux est le traitement à la vapeur de charges hydrocarbonées.

Pour produire de l'hydrogène purifié, on a déjà proposé des systèmes faisant intervenir un réacteur comprenant une zone catalytique de production d'hydrogène dans laquelle une charge hydrocarbonée réagit avec de la vapeur d'eau pour former un mélange gazeux riche en hydrogène. L'extraction sélective de l'hydrogène contenu dans ce mélange est obtenue grâce à des membranes spécialement conçues pour séparer l'hydrogène des autres composants gazeux du mélange.

Les solutions proposées jusqu'ici sont de type continu et mettent habituellement en oeuvre un dispositif de séparation de l'hydrogène (membrane) disposé le long du passage de gaz dans la zone catalytique. Ainsi, le gaz réagit et l'hydrogène est extrait en permanence le long du réacteur, dès qu'il est formé et qu'il atteint le dispositif de séparation.

Il s'avère que ces solutions présentent les inconvénients suivants, même dans le cas où le réacteur est réalisé en plusieurs tronçons :
- Le catalyseur doit être placé au voisinage intime de la membrane, sans quoi le transfert de masse de l'hydrogène vers ladite membrane peut être limitant.
- Les matériaux constitutifs du catalyseur et du séparateur doivent donc être compatibles.
- Le dispositif de filtration doit être suffisamment rapide, c'est-à-dire avoir un flux suffisant, pour que l'extraction de l'hydrogène ait une influence importante sur la composition du gaz à chaque endroit. S'il est trop rapide, alors une certaine partie de sa surface ne verra que très peu de débit car la pression partielle en hydrogène en amont sera maintenue à un niveau bas.
- Si le catalyseur est trop rapide, alors l'équilibre est atteint dès l'entrée du réacteur, le tronçon suivant voit l'extraction de l'hydrogène et la modification de la composition du gaz. Le catalyseur y est inutile. Dès lors que la composition a suffisamment variée, le catalyseur reprend son utilité pour atteindre un nouvel équilibre correspondant aux paramètres d'entrée dans le troisième tronçon, et ainsi de suite.

Les deux cas suivants se résument de la manière suivante :
- Soit la fraction d'hydrogène dans le réacteur est constamment basse du fait de la rapidité de la membrane, mais alors le flux la traversant est faible. La membrane est sous-utilisée.
- Soit le catalyseur est rapide et agit par à-coups, attendant que la composition en hydrogène s'appauvrisse. En conséquence, de larges zones catalytiques sont inutiles. Le catalyseur est sous-utilisé.

La conception de tels systèmes doit être finement étudiée pour atteindre des performances importantes en terme de compacité et de coût, et les paramètres sur lesquels on peut jouer restent peu nombreux (quantité de catalyseur par unité de longueur de réacteur, taille des canaux).

L'invention a plus particulièrement, mais non exclusivement, pour but de supprimer ces inconvénients.

Elle propose, à cet effet, un système de production d'hydrogène purifié comprenant au moins deux étages respectivement amont/aval comportant chacun un réacteur éventuellement catalytique suivi d'un séparateur comportant un espace de circulation du mélange gazeux au contact d'au moins une membrane d'extraction d'hydrogène et un espace de collecte d'hydrogène, le réacteur de l'étage amont étant connecté à une source de mélange gazeux réactionnel, l'espace de circulation du séparateur de l'étage amont étant connecté au réacteur de l'étage aval tandis que les espaces d'extraction/collecte d'hydrogène des deux séparateurs sont reliés à un circuit collecteur d'hydrogène commun aux deux étages.

Grâce à cette disposition, le mélange gazeux réactionnel rencontre successivement les zones de réaction et de séparation, de sorte que l'hydrogène est extrait du mélange réactionnel avant la fin des réactions, l'empêchant ainsi de réagir dans des réactions inverses de production de méthane (ces réactions étant inévitables sans l'extraction de l'hydrogène).

Par ailleurs, cette conception s'adapte particulièrement à l'utilisation de membranes de séparation de géométries planes. Avantageusement, ces membranes de séparation pourront comprendre une structure métallique composite comportant un support poreux de grande porosité, une couche intermédiaire de porosité plus faible et une fine couche dense d'un alliage de palladium sélectivement perméable à l'hydrogène.

Dans le système selon l'invention, le fait de faire successivement les étapes de réaction puis de séparation permet d'obtenir l'amélioration escomptée dans un réacteur à membrane, avec les avantages notoires suivants :
- le dispositif de séparation et le catalyseur ne sont pas en contact intime,
- l'écoulement des fluides peut être étudié séparément dans les zones catalytiques et de séparation,
- des échangeurs thermiques peuvent être installés au voisinage des zones catalytiques endo ou exothermiques,
- les compartiments peuvent être dimensionnés séparément afin d'obtenir le meilleur rapport vitesse de séparation/vitesse de catalyse, en fonction de la charge catalytique,
- au besoin, des zones catalytiques supplémentaires, de même conception, peuvent être ajoutées ou retirées pour atteindre cet optimum,
- le catalyseur peut être renouvelé facilement,
- la séparation amont/aval est garantie par un assemblage complètement soudé,
- il est possible d'utiliser différents catalyseurs sur le même système.

Un mode d'exécution de l'invention sera décrit ci-après, à titre d'exemple non limitatif, avec référence aux dessins annexés dans lesquels :
Les figures 1 et 2 sont deux coupes axiales schématiques, à 90° l'une de l'autre, d'un système étagé de production d'hydrogène selon l'invention ;
La figure 3 est une vue en perspective d'une cloison annulaire servant à assurer la séparation des réacteurs ;
La figure 4 est une vue éclatée, en perspective, montrant les plaques et les contreplaques qui constituent une cloison annulaire de séparation selon une variante d'exécution de l'invention.

Dans cet exemple, le système selon l'invention fait intervenir deux enceintes cylindriques coaxiales 1, 2, à savoir :
- une enceinte extérieure 1 refermée par deux parois radiales 3, 4 respectivement équipées d'un orifice d'admission d'un mélange gazeux réactionnel 5 et un conduit d'évacuation 6 du gaz de synthèse appauvri en hydrogène, et
- une enceinte intérieure 2 de plus petit diamètre dont l'une des deux parois radiales est munie d'un conduit de collecte d'hydrogène 8 purifié, sensiblement coaxial, qui traverse, de façon étanche, la paroi radiale correspondante 3 de l'enceinte extérieure 1.

L'enceinte 1 délimite avec l'enceinte 2 un espace intercalaire divisé en une pluralité de compartiments annulaires C₁ à C₅ (ici cinq compartiments) par des cloisons annulaires (ici quatre cloisons CA₁ à CA₄). Ces compartiments C₁ à C₅ constituent des réacteurs chimiques et comprennent un ou plusieurs catalyseurs spécifiques de la réaction de reformage recherchée. Ces catalyseurs sont choisis en fonction de la charge à convertir en hydrogène. Ils pourront consister en un lit fixe de catalyseurs uniquement, sous les diverses formes rencontrées (granules, monolithes, etc.).

L'enceinte intérieure 2 est elle-même divisée en une pluralité de compartiments circulaires (ici quatre compartiments E₁ à E₄) par l'intermédiaire de modules de séparation d'hydrogène en forme de disques radiaux (ici cinq modules M₁ à M₅). Ces compartiments circulaires E₁ à E₄ constituent des espaces de circulation du mélange gazeux.

Les modules de séparation M₁ à M₅ sont disposés sensiblement en quinconce par rapport aux cloisons annulaires consécutives correspondantes CA₁ à CA₄.

Chacun des compartiments cylindriques E₁ à E₄ communique, grâce à deux orifices opposés O₁ à O₈ prévus dans l'enceinte intérieure, avec deux compartiments annulaires C₁ à C₅ consécutifs (respectivement amont et aval).

Les modules de séparation M₁ à M₅ communiquent, grâce à des orifices O₁₀ à O₁₄ prévus dans la paroi cylindrique de l'enceinte intérieure 2, avec une tubulure de collecte TC d'hydrogène purifié. Ces modules de séparation comprennent chacun une pluralité d'éléments de séparation membranaires pouvant consister, de préférence, en des membranes en palladium ou alliage de palladium, obtenues soit par un dépôt de l'alliage sur un support poreux ayant un coefficient de dilatation proche du palladium et faisant intervenir une technique physique ("Physical Vapor Deposition") ou chimique CVD ("Chemical Vapor Deposition"), électrolyse, électroless adéquate, soit par l'assemblage de feuilles laminées de l'alliage, assemblées de manière à reposer sur un support ouvert, préférentiellement en matériau poreux, mais qui peut également consister en un empilement de tôles grillagées de différentes ouvertures et capable de permettre à ladite feuille de résister à l'écart de pression entre les zones amont (circulation du mélange gazeux réactionnel) et aval (circuit de collecte de l'hydrogène purifié).

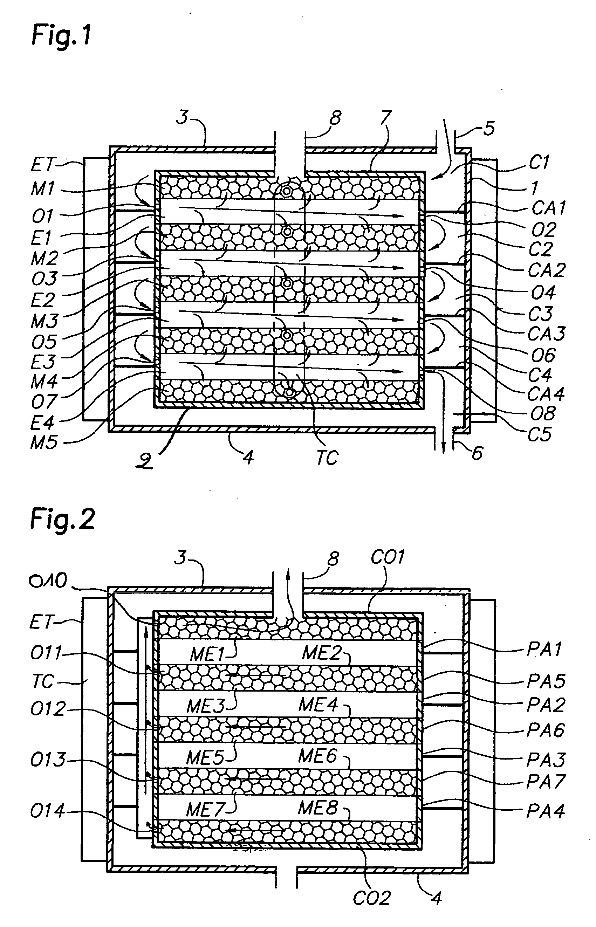

A cet effet, il est possible d'assembler les feuilles laminées par soudage haute énergie entre deux pièces constitutives du séparateur (par exemple comme décrit dans la demande de brevet FR No 03 09812 du 11 août 2003, déposée au nom de la Demanderesse) par soudage, par diffusion ou par brassage. Avantageusement, l'ensemble comprenant l'enceinte intérieure 2 et les modules de séparation est constitué, comme représenté sur les figures 1 et 2, par un empilement de pièces mécaniques soudées, à savoir, alternativement :
- des pièces annulaires PA₁ à PA₄ qui maintiennent l'écartement entre les modules de séparation M₁ à M₅, supportent les cloisons annulaires CA₁ à CA₄ et qui comprennent les orifices O₁ à O₈ de manière à assurer la répartition du fluide à la surface des membranes ME₁ à ME₈, et
- des pièces annulaires PA₅ à PA₇ qui constituent la bordure périphérique des modules de séparation et sur lesquelles sont soudées les membranes ; ces pièces annulaires PA₅ à PA₇ sont munies des orifices O₁₁ et O₁₃.

Dans cet exemple, la paroi tubulaire de l'enceinte intérieure 2 réalisée par l'assemblage des pièces annulaires PA₁ à PA₇ est refermée par des couvercles CO₁ et CO₂ logeant les modules de séparation M₁ et M₅.

Un dispositif mélangeur peut être utilisé pour réduire l'épaisseur de la couche limite de transfert de masse entre le gaz et les surfaces de séparation, par la création d'un régime turbulent. Un tel dispositif peut être formé d'un disque de mousse métallique intercalé sur les orifices de passage du gaz O₁ à O₈ dans les pièces annulaires PA₁ à PA₄ ou d'un lit de billes catalytiques ou non.

Le fonctionnement du dispositif précédemment décrit est alors le suivant :
Le mélange gazeux réactionnel qui pénètre dans l'enceinte 1 par l'orifice d'admission entre dans le premier compartiment annulaire C₁ où il subit une réaction catalytique et est donc partiellement converti en hydrogène. A l'intérieur de ce premier compartiment C₁, le mélange circule autour de l'enceinte intérieure 2 pour parvenir à l'orifice O₁ en l'obligeant ainsi à parcourir toute la zone catalytique de ce premier compartiment C₁.

Cette zone réactionnelle (ici catalytique) qui engendre un processus de reformage fonctionne à une température de 200°C à 800°C à l'aide d'éléments catalytiques éventuels adaptés à la charge hydrocarbonée ou alcoolisée choisie.

Grâce à l'orifice O₁, le mélange riche en hydrogène s'engage et circule dans le premier compartiment circulaire E₁ où il se trouve en contact avec les membranes ME₁, ME₂ des deux modules de séparation M₁, M₂ qui délimitent ce compartiment. L'hydrogène extrait au travers des membranes de ces deux modules, traverse les supports de membrane poreux et est collecté par la tubulure de collecte TC grâce aux orifices O₁₀ et O₁₁.

Avantageusement, un système de circulation du mélange réactionnel pourra être prévu à la surface des membranes ME₁ à ME₈. Ce système pourra comprendre un ensemble de chicanes, de canaux ou de microcanaux, voire même de tous éléments de distribution contribuant à répartir le mélange à la surface des membranes ME₁ à ME₈.

Le mélange gazeux appauvri en hydrogène qui ressort du premier compartiment circulaire E₁ par l'orifice O₂ entre dans le deuxième compartiment annulaire C₂ dans lequel il subit à nouveau une réaction catalytique et s'enrichit à nouveau en hydrogène. Il circule autour de l'enceinte intérieure avant de pénétrer dans le second compartiment circulaire C₂ (par l'orifice O₃) où il subit un nouveau processus de séparation.

Ce processus se répète jusqu'à ce que le mélange gazeux appauvri en hydrogène ressorte du dernier compartiment circulaire C₅ par l'intermédiaire de l'orifice O₈. Il est alors évacué par le conduit d'évacuation 6 par exemple vers un système de post-traitement pouvant comprendre un brûleur catalytique ou non.

Compte tenu du fait que le but de ce dispositif est de produire un hydrogène ultra pur (99,99%), préférentiellement (99,99999%). Le système de séparation équipant les compartiments circulaires E₁ à E₄ comprend des membranes constituées d'une couche de faible épaisseur (quelques µm) en un alliage de palladium (Pd-Ag, Pd-Cu, Pd-Ni) ou tout autre alliage métallique de palladium dense sélectivement perméable à l'hydrogène, d'une couche métallique poreuse permettant de supporter la couche dense et offrant une porosité suffisante pour ne pas générer de perte de charge significative sur le passage de l'hydrogène pur, et d'une couche métallique poreuse de grande porosité.

La séparation de l'hydrogène a lieu en température et sous l'effet du gradient de pressions partielles entre l'amont (pression dans les compartiments circulaires E₁ à E₅) et l'aval de la couche dense d'alliage de palladium de la membrane (pression à l'intérieur des modules de séparation). Cette couche doit donc supporter un écart de pression important, conduisant à la placer sur la structure composite décrite ci-dessus.

On notera que dans l'exemple précédemment décrit, l'étanchéité entre deux compartiments annulaires consécutifs C₁ à C₅, qui est réalisée par les cloisons annulaires CA₁ à CA₄, n'est pas nécessairement totale. En effet, une fuite de mélange gazeux réactionnel peut être tolérée d'un compartiment à l'autre tant qu'elle reste négligeable vis-à-vis du débit nominal.

Bien entendu, l'invention ne se limite pas au mode d'exécution précédemment décrit.

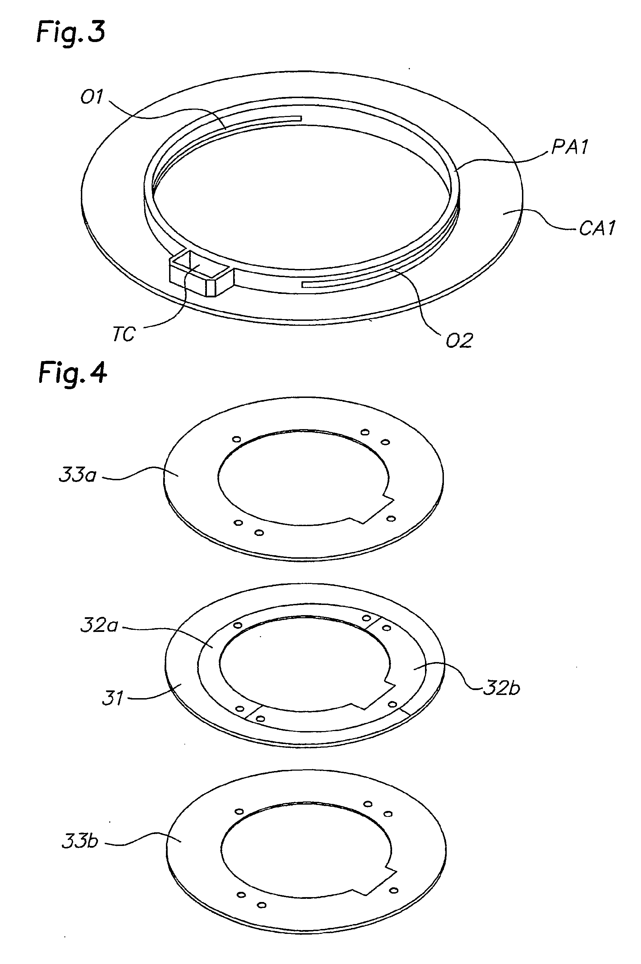

Ainsi, par exemple, les cloisons annulaires CA₁ à CA₄ pourraient être réalisées chacune en un seul tenant avec les pièces annulaires correspondantes PA₁ à PA₄ ainsi qu'un tronçon de la tubulure de collecte d'hydrogène pur TC (figure 3).

Dans cet exemple, les orifices prévus sur les pièces annulaires consistent en des fentes circulaires respectivement disposées en dessus et en dessous de la cloison annulaire.

De même, selon une autre variante d'exécution, les cloisons annulaires CA₁ à CA₄ pourront être réalisées par assemblage de plaques annulaires obtenues par découpe.

Ainsi, par exemple, comme illustré figure 4, cet assemblage pourra faire intervenir deux contreplaques 32a, 32b en forme de demi-couronnes venant s'insérer dans une rainure prévue dans la pièce annulaire PA₁ à PA₄ correspondante. Pour une meilleure étanchéité, ces pièces peuvent être brasées ou collées à la pièce PA₁ à PA₄. Ces deux contreplaques 32a, 32b sont maintenues serrées entre deux plaques en forme de couronne 33a, 33b de manière à obtenir un assemblage solide, vissé ou soudé, qui constitue la cloison annulaire. Ces deux plaques 33a, 33b servent en outre à maintenir un joint intercalaire 31 qui vient se plaquer contre l'enceinte extérieure 1 pour réaliser une étanchéité entre les deux compartiments annulaires séparés par la cloison.

Dans l'exemple illustré sur les figures 1 et 2, on a représenté schématiquement un échangeur thermique ET entourant la paroi cylindrique de l'enceinte extérieure 1.

Cet échangeur ET peut, selon la nature (exothermique ou endothermique) de la réaction catalytique, consister en un système de refroidissement par absorption de calories à l'aide d'un fluide caloporteur utilisable dans un circuit de chauffage ou, à l'inverse, en un générateur calorifique.

Un avantage de la solution précédemment décrite consiste en son caractère modulaire qui lui confère une très grande flexibilité. En effet, chaque ensemble comprenant un couple de pièces annulaires PA₂ - PA₅, une cloison annulaire CA₂ et un module de séparation M₂ constitue une cellule élémentaire pouvant être rejetée pour obtenir un ensemble fonctionnel répondant aux spécifications.

Par ailleurs, on constate que dans ce système, le réseau hydrogène pur relie toutes les parties aval des membranes de séparation. Hormis les membranes de séparation, il constitue une enceinte totalement étanche vis-à-vis des autres zones du système, afin de conserver la pureté de l'hydrogène jusqu'à sa délivrance. Ce réseau est dimensionné de manière à réduire la perte de charge entre les membranes de séparation et la sortie "hydrogène pur" du système.

## Revendications

1. Système étagé de production d'hydrogène purifié à partir d'un mélange gazeux réactionnel comprenant un composé hydrocarboné, **caractérisé en ce qu'**il comprend au moins deux étages respectivement amont/aval comportant chacun un réacteur éventuellement catalytique (C₁ à C₅) suivi d'un séparateur comportant un espace de circulation (E₁ à E₄) du mélange gazeux au contact d'au moins une membrane d'extraction d'hydrogène (ME₁ à ME₈) et un espace de collecte d'hydrogène, le réacteur (C₁) de l'étage amont étant connecté à une source de mélange gazeux réactionnel, l'espace de circulation (E₁) du séparateur de l'étage amont étant connecté au réacteur (C₂) de l'étage aval tandis que les espaces d'extraction/collecte d'hydrogène des deux séparateurs sont reliés à un circuit collecteur d'hydrogène (TC, 8) commun aux deux étages.

2. Système selon la revendication 1,
**caractérisé en ce que** la température de traitement à l'intérieur des réacteurs est comprise entre 200 et 800°C.

3. Système selon l'une des revendications 1 et 2,
**caractérisé en ce que** la susdite membrane d'extraction d'hydrogène (ME₁ à ME₈) comprend une couche de palladium ou d'un alliage de palladium.

4. Système selon la revendication 3,
**caractérisé en ce que** les susdites membranes (ME₁ à ME₈) sont supportées par un métal poreux ayant un coefficient de dilatation proche du palladium et sont assemblées chacune entre deux pièces mécaniques par soudage haute énergie.

5. Système selon l'une des revendications 3 et 4,
**caractérisé en ce que** les membranes (ME₁ à ME₈) ont une géométrie plane.

6. Système selon l'une des revendications précédentes,
**caractérisé en ce qu'**il comprend deux enceintes coaxiales (1, 2) qui délimitent entre elles un espace intercalaire divisé en une pluralité de compartiments annulaires (C₁ à C₅) qui constituent des réacteurs, par des cloisons annulaires (CA₁ à CA₄), **en ce que** l'enceinte intérieure (2) est divisée en une pluralité de compartiments de circulation de mélange gazeux (E₁ à E₄) par l'intermédiaire de modules de séparation d'hydrogène (M₁ à M₅) respectivement disposés entre des couples de cloisons annulaires (CA₁ à CA₄) consécutives correspondantes, chacun des compartiments de circulation (E₁ à E₄) communiquant grâce à deux orifices opposés (O₁, O₂ - O₃, O₄ - O₅, O₆ - O₇, O₈) prévus dans l'enceinte intérieure (2) avec deux compartiments annulaires consécutifs.

7. Système selon la revendication 6,
**caractérisé en ce que** les modules de séparation (M₁ à M₅) communiquent, grâce à des orifices prévus dans la paroi cylindrique de l'enceinte intérieure (2), avec une tubulure de collecte (TC) d'hydrogène purifié.

8. Système selon la revendication 7,
**caractérisé en ce que** les modules de séparation (M₁ à M₅) comprennent chacun une pluralité d'éléments de séparation membranaires.

9. Système selon l'une des revendications 6 à 8,
**caractérisé en ce que** l'ensemble comprenant l'enceinte intérieure (2) et les modules de séparation (M₁ à M₅) comprend un empilement alternatif de pièces annulaires (PA₁ à PA₄) qui maintiennent l'écartement entre les modules de séparation (M₁ à M₅) qui supportent les cloisons annulaires (CA₁ à CA₄) de séparation des réacteurs et qui comprennent des orifices de communication avec les chambres circulaires de circulation du mélange gazeux et de pièces annulaires (PA₅ à PA₇) qui constituent la bordure périphérique des modules de séparation (M₁ à M₅) et sur lesquelles sont soudées les membranes (ME₁ à ME₈), ces pièces annulaires (PA₅ à PA₇) comprenant des orifices d'évacuation d'hydrogène débouchant sur une tubulure de collecte (TC) d'hydrogène.

10. Système selon la revendication 9,
**caractérisé en ce que** l'étanchéité réalisée par les cloisons annulaires (CA₁ à CA₄) entre deux compartiments annulaires consécutifs (C₁ à C₅) n'est pas totale.

11. Système selon la revendication 9,
**caractérisé en ce que** les cloisons annulaires (CA₁ à CA₄) sont réalisées d'un seul tenant avec les pièces annulaires correspondantes (PA₁ à PA₄) et avec un tronçon de tubulure de collecte d'hydrogène (TC).

12. Système selon la revendication 11,
**caractérisé en ce que** les orifices prévus sur les susdites pièces annulaires consistent en des fentes circulaires respectivement disposées en dessus et en dessous de la cloison annulaire.

13. Système selon la revendication 9,
**caractérisé en ce que** les cloisons annulaires sont réalisées par un assemblage de deux contreplaques (32a, 32b) en forme de demi-couronne qui viennent s'insérer avec étanchéité dans une rainure prévue dans la pièce annulaire (PA₁ à PA₄) correspondante, ces deux contreplaques étant serrées entre deux plaques en forme de couronne (33a, 33b).

14. Système selon la revendication 13,
**caractérisé en ce qu'**un joint intercalaire est disposé entre les deux plaques (33a, 33b).

## Claims

1. A staged system for producing purified hydrogen from a reaction gas mixture comprising a hydrocarbon compound, **characterized in that** it comprises at least two respectively upstream/downstream stages each including an optionally catalytic reactor (C₁-C₅) followed by a separator including a circulation space (E₁-E₄) in which the gas mixture flow, in contact with at least one hydrogen extraction membrane (ME₁-ME₈) and a space for collecting hydrogen, the reactor (C₁) of the upstream stage being connected to a source of reaction gas mixture, the flow space (E₁) of the separator of the upstream stage being connected to the reactor (C₂) of the downstream stage while the hydrogen extraction/collecting spaces of both separators are connected to a hydrogen collecting circuit (TC, 8) common to both stages.

2. The system according to claim 1,
**characterized in that** the professing temperature inside the reactors is between 200 and 800°C.

3. The system according to any of claims 1 and 2,
**characterized in that** the aforesaid hydrogen extraction membrane (ME₁ - ME₈) comprises a palladium or palladium alloy layer.

4. The system according to claim 3,
**characterized in that** the aforesaid membrane (ME₁ - MEg) are supported by a porous metal with an expansion coefficient close to that of palladium and are each assembled between two mechanical parts by high energy welding.

5. The system according to any of claims 3 and 4,
**characterized in that** the membranes (ME₁-ME₈) have planar geometry.

6. The system according to any of the preceding claims, **characterized in that** it comprises two coaxial enclosures (1, 2) which delimit between them an intermediate space divided into a plurality of annular compartments (C₁-C₅) which form reactors, by annular partitions (CA₁-CA₄), **in that** the inner enclosure (2) is divided into a plurality of gas mixture flow compartments (E₁-E₄) via hydrogen separation modules (M₁-M₅) respectively positioned between couples of corresponding consecutive annular partitions (CA₁-CA₄), each of the flow compartments (E₁-E₄) communicating via two opposite ports (O₁, O₂-O₃, O₄-O₅, O₆-O₇, O₈) provided in the inner enclosure (2), with two consecutive annular compartments.

7. The system according to claim 6,
**characterized in that** the separation modules (M₁-M₅) communicate via ports provided in the cylindrical wall of the inner enclosure (2), with a manifold for collecting (TC) purified hydrogen.

8. The system according to claim 7,
**characterized in that** the separation modules (M₁-M₅) each comprise a plurality of membrane separation components.

9. The system according to any of claims 6 to 8,
**characterized in that** the assembly comprising the inner enclosure (2) and the separation modules (M₁-M₅) comprises an alternating stack of annular parts (PA₁-PA₄) which maintain the gap between the separation modules (M₁-M₅) which support the annular partitions (CA₁-CA₄) for separating the reactors and which comprise ports for communicating with the circular gas mixture flow chambers and annular parts (PA₅-PA₇) which form the peripheral edge of the separation modules (M₁-M₅) and on which the membranes (M₁-ME₈) are welded, these annular parts (PA₅-PA₇) comprising hydrogen discharge ports opening into a hydrogen collecting manifold (TC).

10. The system according to claim 9,
**characterized in that** the seal achieved by the annular partitions (CA₁-CA₄) between two consecutive annular compartments (C₁-C₅) is not complete.

11. The system according to claim 9,
**characterized in that** the annular partitions (CA₁-CA₄) are made in a single piece with the corresponding annular parts (PA₁-PA₄) and with a hydrogen collecting manifold section (TC).

12. The system according to claim 11,
**characterized in that** the ports provided on the aforesaid annular part consist in circular slots respectively positioned above and below the annular partition.

13. The system according to claim 9,
**characterized in that** the annular partitions are made by assembling two counter-plates (32a, 32b) as a half crown, which will be sealably inserted in a groove provided in the corresponding annular part (PA₁-PA₄), both of these counter-plates being clamped between two crown-shaped plates (33a, 33b).

14. The system according to claim 13,
**characterized in that** an intermediate gasket is positioned between both plates (33a,33b).

## Patentansprüche

1. Mehrstufiges System zur Erzeugung von reinem Wasserstoff aus einem reaktiven kohlenwasserstoffhaltigen Gasgemisch,
**dadurch gekennzeichnet, dass** es mindestens zwei jeweils vor- bzw. nachgeschaltete Stufen umfasst, von denen jede mit einem gegebenenfalls katalytischen Reaktor (C₁ bis C₅) ausgestattet ist, gefolgt von einem Separator, der einen Zirkulationsraum (E₁ bis E₄) für das Gasgemisch mit Kontakt zu mindestens einer Membran zur Wasserstoffextraktion (ME₁ bis ME₈) sowie einen Wasserstoffsammelraum aufweist, wobei der Reaktor (C₁) der vorgeschalteten Stufe an eine Quelle des reaktiven Gasgemisches angeschlossen ist und der Zirkulationsraum (E₁) des Separators der vorgeschalteten Stufe an den Reaktor (C₂) der nachgeschalteten Stufe angeschlossen ist, während die Wasserstoffextraktions-/ Wasserstoffsammelräume beider Separatoren mit einem beiden Stufen gemeinsamen Wasserstoffsammelkreislauf (TC, 8) verbunden sind.

2. System nach Anspruch 1,
**dadurch gekennzeichnet, dass** die Behandlungstemperatur im Innern der Reaktoren zwischen 200 und 800 °C liegt.

3. System nach einem der Ansprüche 1 oder 2,
**dadurch gekennzeichnet, dass** die oben genannte Membran zur Wasserstoffextraktion (ME₁ bis ME₈) eine Schicht aus Palladium oder einer Palladiumlegierung umfasst.

4. System nach Anspruch 3,
**dadurch gekennzeichnet, dass** die oben genannten Membranen (ME₁ bis ME₈) von einem porösen Metall gehalten werden, dessen Ausdehnungskoeffizient ähnlich dem von Palladium ist und dass jede Membran per Hochleistungsschweißverfahren zwischen zwei mechanischen Teilen eingeschweißt ist.

5. System nach einem der Ansprüche 3 oder 4,
**dadurch gekennzeichnet, dass** die Membranen (ME₁ bis ME₈) eine ebene Geometrie aufweisen.

6. System nach einem der vorhergehenden Ansprüche,
**dadurch gekennzeichnet, dass** es zwei koaxiale Umschließungen (1, 2) aufweist, die einen Zwischenbereich einschließen, der durch Ringtrennwände (CA₁ bis CA₄) in mehrere ringförmige Abschnitte (C₁ bis C₅) unterteilt ist, die die Reaktoren darstellen, und **dadurch**, dass die innere Umschließung (2) durch Wasserstoffseparationsmodule (M₁ bis M₅), die jeweils zwischen den entsprechend aufeinanderfolgenden Paaren der Ringtrennwände (CA₁ bis CA₄) liegen, in mehrere Zirkulationsräume für das Gasgemisch (E₁ bis E₄) unterteilt ist, wobei jeder Zirkulationsraum (E₁ bis E₄) über zwei gegenüberliegende Öffnungen (O₁, O₂ - O₃, O₄ - O₅, O₆-O₇, O₈) in der inneren Umschließung (2) mit zwei aufeinanderfolgenden Ringabschnitten verbunden ist.

7. System nach Anspruch 6,
**dadurch gekennzeichnet, dass** die Separationsmodule (M₁ bis M₅) über Öffnungen in der Zylinderwand der inneren Umschließung (2) mit einem Sammelrohr (TC) für reinen Wasserstoff verbunden sind.

8. System nach Anspruch 7,
**dadurch gekennzeichnet, dass** jedes der Separationsmodule (M₁ bis M₅) viele Membranelemente zur Separation umfasst.

9. System nach einem der Ansprüche 6 bis 8,
**dadurch gekennzeichnet, dass** die Einheit aus der inneren Umschließung (2) und den Separationsmodulen (M₁ bis M₅) einen Stapel umfasst, der abwechselnd aus Ringelementen (PA₁ bis PA₄), die den Abstand zwischen den Separationsmodulen (M₁ bis M₅) aufrecht erhalten, die die Ringtrennwände (CA₁ bis CA₄) der Reaktoren halten und die Verbindungsöffnungen zwischen den kreisförmigen Zirkulationskammern für das Gasgemisch aufweisen, und aus Ringelementen (PA₅ bis PA₇), die den äußeren Rand der Separationsmodule (M₁ bis M₅) darstellen und auf die die Membranen (ME₁ bis ME₈) geschweißt sind, besteht, wobei letztere Ringelemente (PA₅ bis PA₇) Auslassöffnungen für den Wasserstoff aufweisen, die in ein Sammelrohr (TC) für Wasserstoff münden.

10. System nach Anspruch 9,
**dadurch gekennzeichnet, dass** die durch die Ringtrennwände (CA₁ bis CA₄) hergestellte Dichtigkeit zwischen zwei aufeinanderfolgenden Ringabschnitten (C₁ bis C₅) nicht vollständig ist.

11. System nach Anspruch 9,
**dadurch gekennzeichnet, dass** die Ringtrennwände (CA₁ bis CA₄) mit den entsprechenden Ringelementen (PA₁ bis PA₄) und einem Teilstück für das Wasserstoffsammelrohr (TC) aus einem Stück gefertigt sind.

12. System nach Anspruch 11,
**dadurch gekennzeichnet, dass** die in den oben genannten Ringelementen vorgesehenen Öffnungen aus ringförmigen Schlitzen bestehen, die jeweils über und unter einer Ringtrennwand angeordnet sind.

13. System nach Anspruch 9,
**dadurch gekennzeichnet, dass** die Ringtrennwände aus einer Einheit von zwei halbringförmigen Gegenplatten (32a, 32b) zusammengesetzt sind, die dicht in eine dafür vorgesehene Nut im entsprechenden Ringelement (PA₁ bis PA₄) eingesetzt werden, wobei die beiden Gegenplatten zwischen zwei ringförmige Platten (33a, 33b) geklemmt werden.

14. System nach Anspruch 13,
**dadurch gekennzeichnet, dass** zwischen den zwei Platten (33a, 33b) eine zwischengeschaltete Dichtung angeordnet ist.
